# EUROPEAN PATENT APPLICATION

(11) **EP 2 801 265 A2**
(43) Date of publication of application: **12.11.2014**
(21) Application number: 14001622.1
(22) Date of filing: 08.05.2014
(51) Int. Cl.: A23P 1/02, A23P 1/10

(54) **A compression mould for compressing a compressible material into a predetermined shape, an end piece for a mould as well as a compression device comprising a compression mould**

(30) Priority: 08.05.2013 NL 2010781
(71) Applicant: Aarts Montage Techniek, 5081 VW Hilvarenbeek (NL)
(72) Inventor: Aarts, Roel Jacobus Theodorus Nicolaas, 5081 VW HILVARENBEEK (NL)
(74) Representative: Algemeen Octrooi- en Merkenbureau B.V.

(57) **Abstract**

A compression mould for compressing a compressible material into a predetermined shape, wherein the compression mould is designed for compressing the compressible material at a compression temperature of at most 100 degrees Celsius, the compression mould comprising a multitude of pressure channels having an inlet end and an outlet end, a multitude of separate end pieces provided with a passage having a cross-section corresponding to said shape, wherein the end pieces are mounted in the outlet ends of the pressure channels.

## Description

The present invention generally relates to the compression of all kinds of materials, such as cattle feed, waste and sawdust, for example, for the purpose of providing products having a particular shape, such as dog food chunks in the form of a square, a heart, a star, etc.

A shape as mentioned above is usually obtained in that a mould comprises pressure channels having such a profile. Because the material to be compressed is forced through the pressure channels, the material will assume the shape of the profile.

A problem that presents itself with known moulds is that it is difficult to create shapes having a relatively small diameter. Think in this regard of dog food chunks, for example, camel feed, etc. Dog food chunks, for example, are produced by forcing dog food through the pressure channels and cutting to size the dog food being forced out of the pressure channels. At present only a few shapes, i.e. shapes having a cross-section of a dog food chunk, which can be produced with existing moulds are available. A shape that is much used is simply the "round" shape, as this shape is easy to produce by creating pressure channels by means of boreholes.

The object of the present invention is to provide a flexible compression mould by means of which it is possible to compress material into all kinds of shapes, even if the diameter of said shapes is relatively small.

According to a first aspect, the invention provides a compression mould for compressing a compressible material into a predetermined shape, wherein the compression mould is designed for compressing the compressible material at a compression temperature of at most 100 degrees Celsius, the compression mould comprising a multitude of pressure channels having an inlet end and an outlet end, a multitude of separate end pieces provided with a passage having a cross-section corresponding to said shape, wherein the end pieces are mounted in the outlet ends of the pressure channels.

The invention is based on the insight that if use is made of separate end pieces provided with a passage having a cross-section corresponding to the desired shape, more different shapes can be realised than with traditional moulds. This is made possible, inter alia, by the fact that the length of the end pieces may be smaller or equal to the length of the pressure channels. As a result, several process variables are available to the manufacturer of compression moulds, which variables may be adapted to provide a compression mould.

In addition to that, the manufacturer of the compression mould can to a certain extent determine the diameter of the pressure channels himself. A restriction that applies in this regard is that the diameter of the pressure channels must be larger than the diameter of the final profile shape that is desired.

The consequence of the above is that it is no longer necessary to carry out difficult operations directly on a mould. Said operations can take place in a simpler and quicker manner and with more possibilities on the separate end pieces.

Separate end pieces according to the present invention are regarded as end pieces which can be produced separately from the rest of the mould and which can thus also be mounted in the mould at a separate location, for example.

In addition to that, the various end pieces can be connected together, thus providing a shell which can be mounted in the mould as a whole.

The end pieces can be worked in advance, using a lathe and/or an electrical discharge machining device. Furthermore, a taper can be turned in the end piece, in which case the end piece will exhibit a taper, and the end piece can be externally provided with screw thread.

The above will have an additional positive effect if the length of the pressure channels is greater than the diameter of the pressure channels. A known rule of thumb is that the diameter of a hole, i.e. pressure channel, must not be smaller than the thickness of the passage, i.e. the length of the pressure channel. The more the proportion between diameter and length comes near this lower limit, the higher the load on the tool and the greater the risk of tool fracture during the manufacture of the compression moulds will be. Furthermore, it will have an adverse effect as regards the deformation and the tension in the compression mould.

Within the context of the present patent application, a compression mould is a mould in which a temperature of at most 100 degrees Celsius is used. In popular speech this is called cold-pressing. The material to be compressed is not forced through channels under high pressure and at a high temperature, i.e. temperatures in excess of 100 degrees Celsius, as is the case with traditional extrusion moulds.

In the case of a compression mould, the material to be compressed need not be ground up in advance over a screen of 1.25 mm or finer, for example, before being compressed. In the case of an extrusion mould, on the other hand, the material to be moulded must be refined in advance. Furthermore, a compression mould is often in one piece, i.e. one metal, circular ring, for example, in which the pressure channels are incorporated.

As a result, the material to be compressed, using a compression mould according to the present invention, is formed during the entire compression process rather than just before the material exits the mould, as is the case with extrusion. The material to be compressed is forced directly into the channel, and does not flow toward an extrusion channel via various channels.

The temperature that is used in the present compression mould ranges between 60 and 90 degrees Celsius, for example, preferably between 70 and 80 degrees Celsius.

In one example, the compression mould comprises a round metal ring, wherein the round metal ring comprises the multitude of pressure channels, and wherein the compression mould further comprises at least one roller for forcing the compressible material through the multitude of pressure channels.

The roller forces the material to be compressed through the pressure channels in the round metal ring, which pressure channels comprise the end pieces.

In one embodiment of the invention, the end pieces are mounted in the pressure channels via at least one of a screwed connection, a welded connection, a glued connection, etc.

A determining factor in this regard is that the connection must be so strong that it is capable of resisting the pressure exerted by the material to be compressed. A combination of screwing and glueing appears to produce good results, although sufficient mounting means for realising a sufficiently strong connection are known to the skilled person.

In another embodiment, the length of the end pieces corresponds to the length of the pressure channels of said multitude of pressure channels.

The inventors have realised that if the end pieces are fully incorporated in the mould, the risk of the material getting stuck during the compression operation will be smallest. Since the end pieces form both the inlet end and the outlet end in the present embodiment, no transitions at which the material may get stuck exist between a pressure channel and a passage.

In another embodiment, the profile is recessed in the passage. Since the profile is recessed in the passage, i.e. the end piece comprises a recessed edge at the end, seen in a longitudinal direction thereof, the risk of the material getting stuck is reduced.

In yet another embodiment, the diameter of the pressure channels is larger at the outlet end than at the inlet end.

According to the present invention, it is possible in that case that the pressure channels are provided with screw thread at the outlet end, and that the separate end pieces comprise screw thread, such that the passage of the mounted end pieces connects to the pressure channels.

In one embodiment, the pressure channels are boreholes whose dimension ranges between M2 and M24.

According to a second aspect, the invention provides an end piece for use in a compression mould according to one of the above-described embodiments.

In one embodiment of the end piece, the profile is recessed in the passage, that is, the end piece comprises a sloping edge at the end.

According to a third aspect, the invention provides a compression device for compressing the material into a predetermined shape, comprising a mould according to one of the above-described embodiments, a material store comprising the material to be compressed, an inlet designed for supplying the material to be compressed to the compression mould, and means for forcing the material through the compression mould.

In one embodiment thereof, the compression device further comprises cutting means for cutting to size material that is being forced out of the compression mould. An example of a compression device according to the present invention is a compression device suitable for providing dry cattle feed.

The invention will now be explained in more detail by means of a description of an embodiment of the invention, in which reference is made to the following figures:
Figures 1a and 1b are schematic cross-sectional views of a compression mould according to the present invention;
Figures 2a and 2b schematically show an example of an end piece according to the present invention.

Identical reference numerals are used a number of times in all the figures, which reference numerals are used to indicate identical or similar aspects and/or features, however.

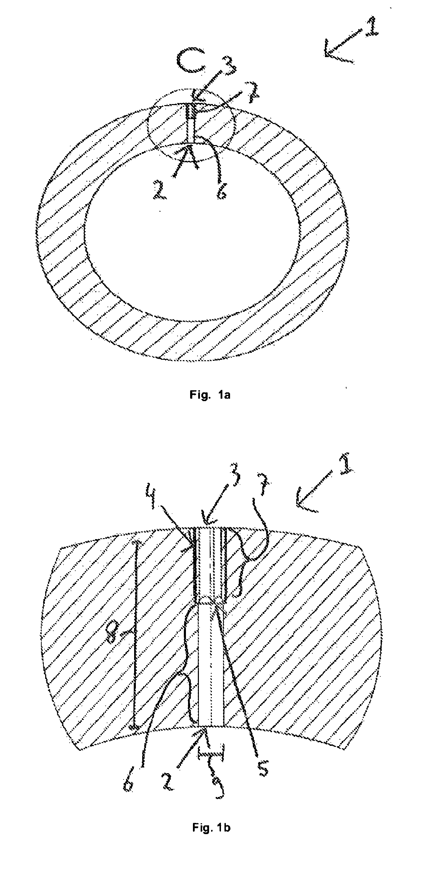

The compression mould 1 is shown on a larger scale in figure 1b. The mould 1 comprises a multitude of pressure channels 2 (only one of which is shown in the figure) having an inlet end 6 and an outlet end 7. Material present in the compression mould 1 is forced out with great force from the inlet end 6 to the outlet end 7 of the pressure channels 2.

With the known moulds, it is the shape of the pressure channel 2 that determines the final shape of the material that is pressed out. In the present invention, however, use is made of a multitude of separate end pieces 3 (only one of which is shown) having a passage with a cross-section that corresponds to the desired shape. This means that the passage of the end piece 3 determines the shape, i.e. the desired profile, of the compressible material that is pressed out.

The advantage is that the manufacturer of compression moulds can operate much more flexibly, because producing these relatively small (in relation to the complete compression mould 1) parts is more labour-intensive than producing the compression mould 1 itself.

The material to be compressed is forced through the pressure channels by means of rollers (not shown) on the inner side of the compression mould 1, in that said rollers roll over the compressible material on the inner side of the compression mould 1.

In the foregoing, the present invention has been explained on the basis of a number of examples. As the skilled person will appreciate, various modifications and additions are conceivable within the scope of the invention as defined in the appended claims.

In order to illustrate the whole more clearly, one pressure channel 2 of the compression mould 1 is shown on a larger scale in figure 1 b. The total length 8 of the pressure channel, i.e. the thickness of the compression mould 1, is divided into two parts in this case, one part being the inlet end 6 and the other part being the outlet end 7.

In the compression mould 1 shown herein, the end piece 3 is mounted in the compression mould 1 by means of a screwed connection 4. Said screwed connection 4 is so strong that the pressure of the material being forced out on the end piece 3 will not cause movement of the end piece 3.

As the figure also shows, the desired profile 5 is recessed in the end piece 3. The diameter of the passage of the pressure channel gradually decreases toward the passage, as it were. This has the advantage that the material being forced out will not get stuck, since there are no edges at the transition, for example, behind which material can get stuck.

The compression 1 of this example exhibits the additional advantageous features of the present invention. As can be derived from the figure, the thickness of the compression mould, i.e. the length of the pressure channels 2, is greater than the diameter 9 of the pressure channel. This means that it is practically impossible to realise a desired profile directly in the compression mould 1.

Because use is made of relatively small end pieces 3, it becomes possible to realise the desired profile in said end pieces 3, since the proportion between width and length of the end pieces 3 is more advantageous.

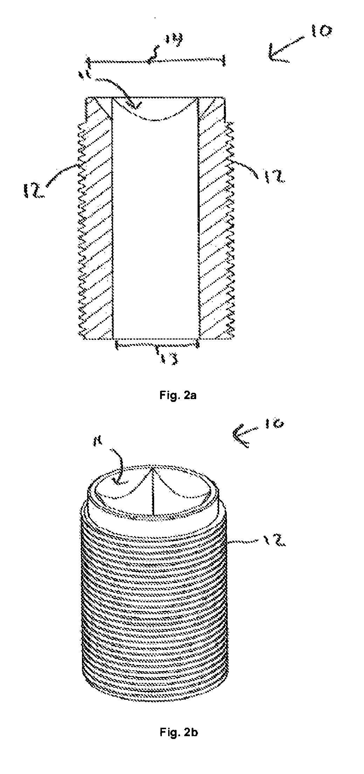

Figures 2a and 2b schematically show an example of an end piece 10 according to the present invention. In the present example, the end piece 10 is provided with a screw thread 12 for securely mounting the end piece in the compression mould 1, using a screwed connection.

In the present example, the end piece 10 is an insert, i.e. the end piece 10 is in its entirety mounted in a pressure channel.

The end piece 10 further comprises a square profile (shown in figure 2b), which profile 11 is recessed in the end piece 10. As figure 2b shows, this means that the profile is gradually provided in the end piece 14, as it were, so that there are no abstract transitions for the material being forced out.

The total diameter 14 of the end piece is larger than the diameter of the feed-through aperture 13. This is caused by the fact that use is made of external screw thread 12 on the end piece 10. This further implies that the diameter of the outlet end of the pressure channels is larger than the diameter of the inlet end of the pressure channels.

To reduce the risk of material getting stuck upon being forced out, the diameter 13 of the feed-through aperture must be adapted to that of the inlet end of the pressure channels of the compression mould.

The embodiment of a compression mould and an end piece as described in the foregoing must by no means be interpreted as being limitative to the scope of the present invention. The skilled person will appreciate that the advantages of the invention will be realised irrespective of the kind of compression mould that is used.

## Claims

1. A compression mould for compressing a compressible material into a predetermined shape, wherein the compression mould is designed for compressing the compressible material at a compression temperature of at most 100 degrees Celsius, the compression mould comprising a multitude of pressure channels having an inlet end and an outlet end, a multitude of separate end pieces provided with a passage having a cross-section corresponding to said shape, wherein the end pieces are mounted in the outlet ends of the pressure channels.

2. A compression mould according to claim 1, wherein the compression mould comprises a round metal ring, wherein the round metal ring comprises the multitude of pressure channels, and wherein the compression mould further comprises at least one roller for forcing the compressible material through the multitude of pressure channels.

3. A compression mould according to any one of the preceding claims, wherein a length of the pressure channels is greater than a diameter of the pressure channels.

4. A compression mould according to any one of the preceding claims, wherein the end pieces are mounted in the pressure channels via at least one of a screwed connection, a welded connection, a glued connection, etc.

5. A compression mould according to any one of the preceding claims, wherein a length of the end pieces corresponds to the length of the pressure channels of said multitude of pressure channels.

6. A compression mould according to any one of the preceding claims, wherein the profile is recessed in the passage.

7. A compression mould according to any one of the preceding claims, wherein a diameter of the pressure channels is larger at the outlet end than at the inlet end.

8. A compression mould according to claim 6, wherein the pressure channels are provided with screw thread at the outlet end, and wherein the separate end pieces comprise screw thread, such that the passage of the mounted end pieces connects to the pressure channels.

9. A compression mould according to any one of the preceding claims, wherein the pressure channels are boreholes whose dimension ranges between M2 and M24.

10. An end piece for use in a compression mould according to any one of the preceding claims.

11. An end piece according to claim 10, wherein the profile is recessed in the passage.

12. An end piece according to either one of claims 10 - 11, wherein a length of the passage is greater than a diameter of the passage.

13. A compression device for compressing a compressible material into a predetermined shape, comprising:
a mould according to one of claims 1 - 9;
a material store comprising the material to be compressed;
an inlet designed for supplying the material to be compressed to the compression mould;
means for forcing the material through the compression mould.

14. A compression device according to claim 13, wherein the compression device further comprises cutting means for cutting to size material that is being forced out of the compression mould.

15. A compression device according to either one of claims 13 and 14, wherein the compression device is suitable for providing cattle feed chunks.
